# EUROPÄISCHE PATENTSCHRIFT

(11) **EP 1 759 573 B1**
(45) Veröffentlichungstag und Bekanntmachung des Hinweises auf die Patenterteilung: **04.06.2008**
(21) Anmeldenummer: 06007689.0
(22) Anmeldetag: 12.04.2006
(51) Int. Cl.: A01D 34/86

(54) **Mäh- und/oder Schneidgerät**
Mowing and/or cutting device
Appareil à faucher et/ou couper

(30) Priorität: 22.04.2005 DE 202005006541 U; 22.04.2005 DE 102005018987; 22.04.2005 DE 202005006539 U; 22.04.2005 DE 202005006542 U; 22.04.2005 DE 202005006540 U
(43) Veröffentlichungstag der Anmeldung: 07.03.2007
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(56) Entgegenhaltungen:
- EP-A- 1 159 866
- DE-U1- 20 211 861

## Beschreibung

Die Erfindung betrifft ein Mäh- und/oder Schneidgerät mit zumindest einem an einem Fahrzeug halterbaren und gegenüber diesem an zumindest einer oberen und einer unteren Führungshilfe quer beweglichen Ausleger, nach dem Oberbegriff des Anspruchs 1 (siehe z.B. DE-U-20211861).

Bei solchen Mäh- und/oder Schneidgeräten ist es bekannt, den Ausleger insgesamt quer zum Fahrzeug beweglich zu halten, um ihn damit zwischen einer ausgreifenden Arbeitsstellung und einer zum Beispiel vor dem Fahrzeug eingefaltetcn Transportstellung oder zwischen zwei zu unterschiedlichen Seiten ausgreifenden Arbeitsstellungen verlagern oder ihn während des Ausgreifens zu einer Seite unterschiedlich weit ausschieben zu können.

Dabei werden zum Beispiel als Führungshilfen zwei mit Abstand zueinander und übereinander liegende Rundrohre aus Stahl verwendet, deren oberes von einer oberen Halbschale eines Läufers des Auslegers übergriffen und deren unteres von einer unteren Halbschale des Läufers untergriffen ist. Dabei wird die Gewichtskraft des Auslegers zu einem sehr großen Anteil nur von dem oberen Rohr getragen. Der Bereich der oberen Halbschale des Läufers ist daher sehr massiv und stabil auszuführen, was zu einem hohen Schwerpunkt und einer großen Bauhöhe führt. Beides ist ungünstig für die Handhabung des Fahrzeuges, da zum einen die Fahreigenschaften negativ beeinflußt werden und zum anderen die Sicht nach vorne für den Fahrer eingeschränkt ist. Zudem sind Rundrohre hinsichtlich ihrer Stabilität begrenzt und müssen daher besonders dickwandig ausgebildet sein, was den Schwerpunkt und das Gewicht weiter erhöht.

Der Erfindung liegt das Problem zugrunde, die Nachteile bei einem Mäh- und/oder Schneidgcrät der genannten Art zu minimieren.

Die Erfindung löst dieses Problem durch ein Mäh- und/oder Schneidgerät mit den Merkmalen des Anspruchs 1 sowie durch einen an einem Läufer gehaltenen Ausleger mit den Merkmalen des Anspruchs 12. Hinsichtlich vorteilhafter Ausgestaltungen wird auf die abhängigen Ansprüche 2 bis 11 verwiesen.

Erfindungsgemäß ist die Bauhöhe dadurch verringert, daß der Läufer mit seinem oberen Ende die obere Führungshilfe untergreift. Der Schwerpunkt liegt tiefer, da die Last nicht mehr einseitig auf die obere Führungshilfe übertragen wird und zumindest die Hauptmasse des Läufers in einer Höhe zwischen oberer und unterer Führungshilfe gelegen ist.

Dabei ergibt sich eine besondere Stabilität, wenn die Führungshilfen als mit mehreren parallelen Längskanten versehene Kastenprofile anstelle bisheriger Rundrohre ausgebildet sind. Die Steifigkeit der Führungshilfen kann damit auch ohne Gewichtssteigerung deutlich erhöht sein.

Eine Schrägfläche an zumindest einer Führungshilfe erleichtert dabei eine Nachstellmöglichkeit des Läufers.

Zur Abfangung der wirkenden Kräfte kann vorteilhaft eine oder jede Führungshilfe mit einer rückseitigen und von dem Läufer hintergriffene Vertikalfläche versehen sein, so daß ein Teil der Gewichtskraft in eine nach vorne gerichtete Zugkraft umwandelbar ist. Dies gilt insbesondere für die obere Führungshilfe, da das Gewicht des Auslegers vor dieser gelegen ist und damit nach vorne zieht.

Dabei ist besonders günstig, wenn der Läufer zumindest bezüglich der Fahrzeuglängsrichtung und/oder entlang einer Vertikalen nachstellbar ist, um somit eine möglichst gleichmäßige Verteilung seines Gewichts auf eine obere und eine untere Führungshilfe zu erreichen und dennoch nicht durch eine zu feste Einspannung einen zu großen Widerstand gegen eine Querverschiebung aufzubauen.

Auch einem Verschleiß der Gleitfläche des Läufers kann durch die Nachstellung Rechnung getragen werden.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Ansicht von vorne eines erfindungsgemäßen Mäh- und/oder Schneidgeräts mit einer frontseitig an einem Fahrzeug angeordneten Mähvorrichtung in Arbeitsstellung mit ein Hindernis übergreifendem Ausleger,
- Fig. 2: eine ähnliche Ansicht wie Fig. 1 mit in einer quer vor dem Fahrzeug gehaltenen Transportstellung des Auslegers,
- Fig. 3: das Mäh- und/oder Schneidgerät nach Fig. 1 in Seitenansicht mit in einer Längstransportstellung befindlichem Ausleger,

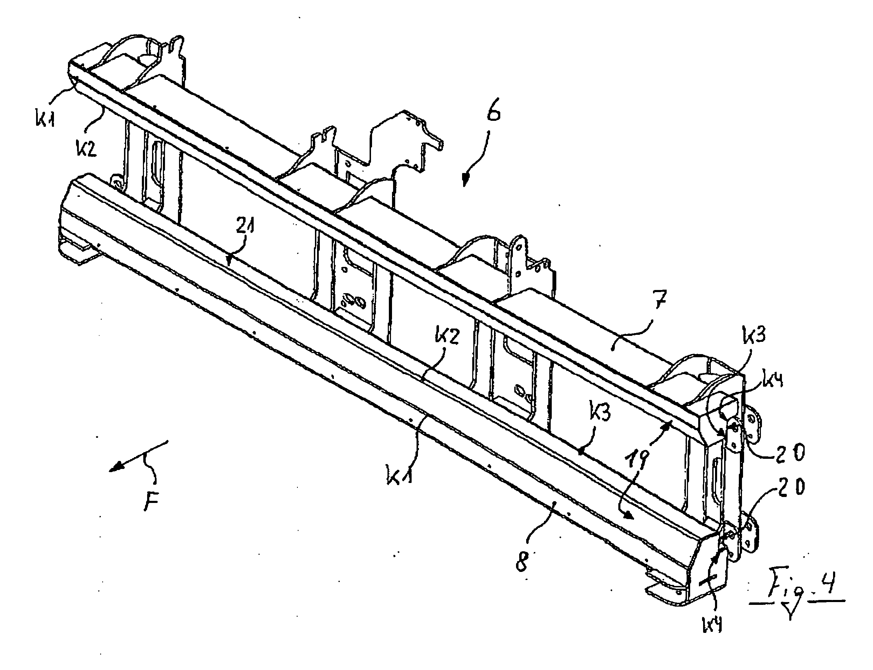

- Fig. 4: eine perspektivische Einzelteildarstellung des Trägers mit zwei übereinander liegenden Führungshilfen für die Querverschiebung des Auslegers vor dessen Montage,

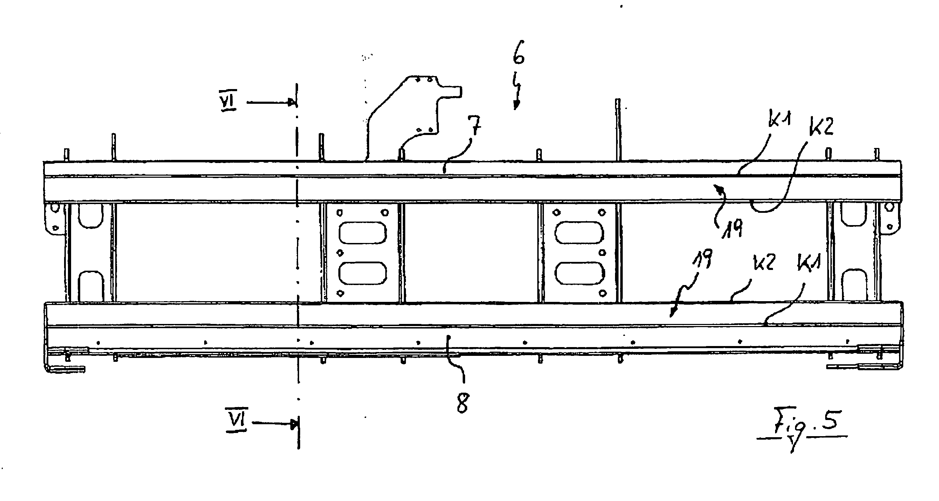

- Fig. 5: den Träger mit den Führungshilfen nach Fig. 4 in Ansicht von vorne,

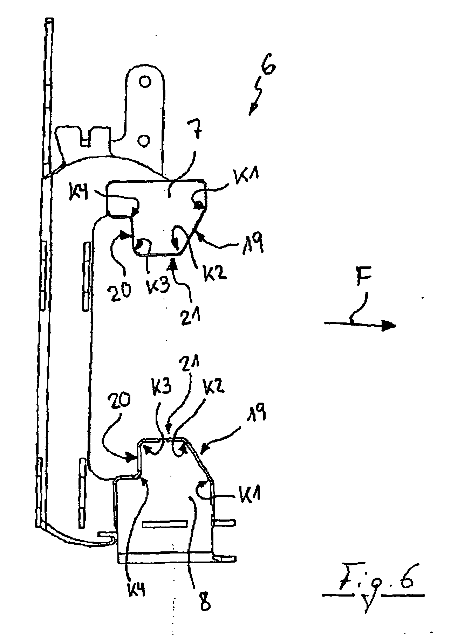

- Fig. 6: einen Schnitt entlang der Linie VI-VI in Fig. 5,

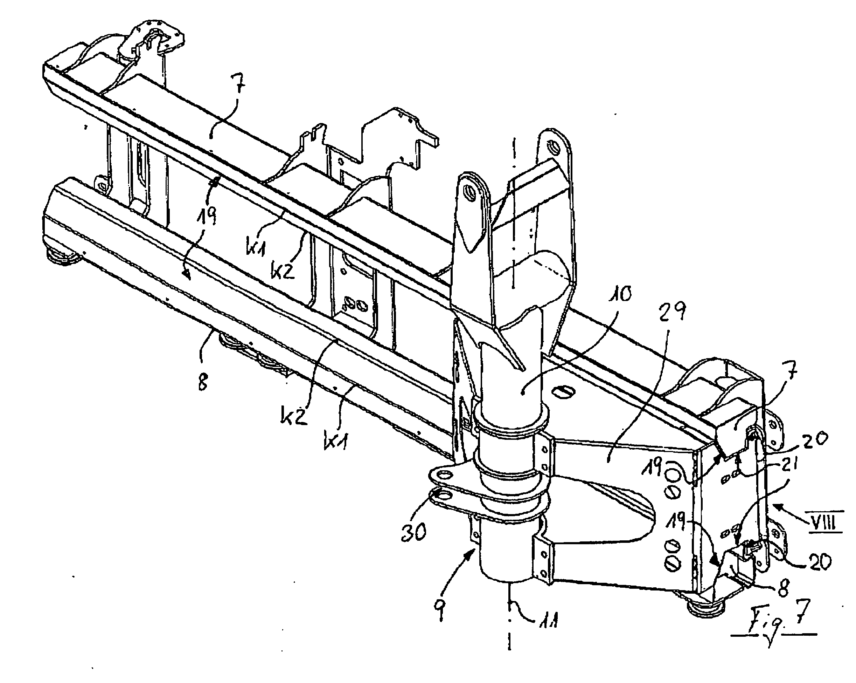

- Fig. 7: eine ähnliche Ansicht des Trägers wie in Fig. 4, jedoch mit montierter Halterung für den Ausleger,

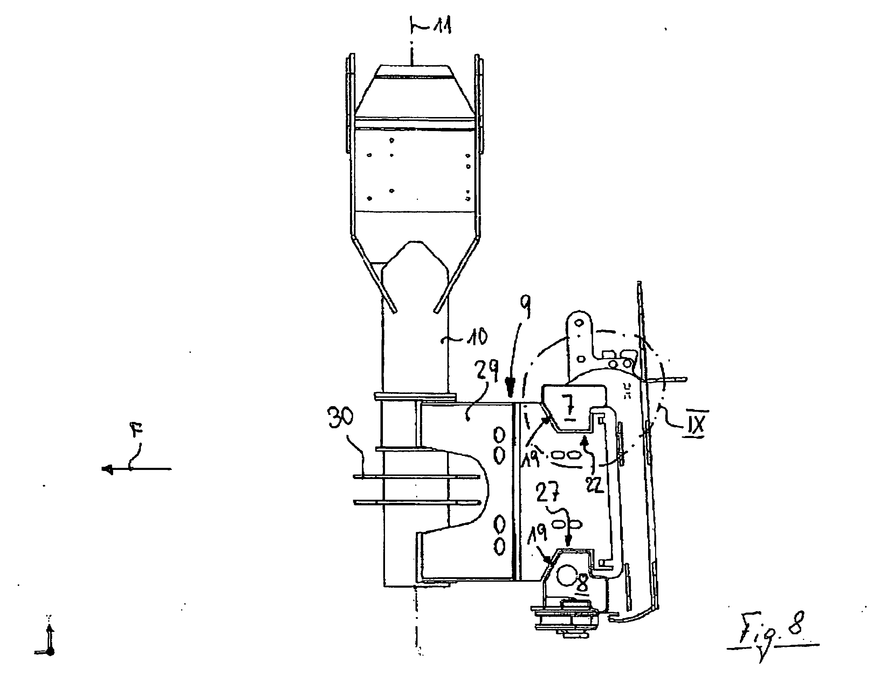

- Fig. 8: eine Seitenansicht des Trägers mit an den Führungshilfen montiertem Läufer und Halterung für den Ausleger, etwa entsprechend einer Ansicht in Richtung des Pfeils VIII in Fig. 7,
- Fig. 9: eine Detailansicht etwa des Ausschnitts IX in Fig. 8 nach Entfernen einer Seitenverkleidung mit detaillierter Ansicht einer Nachstellmöglichkeit für die Positionierung des Läufers an den Führungshilfen.

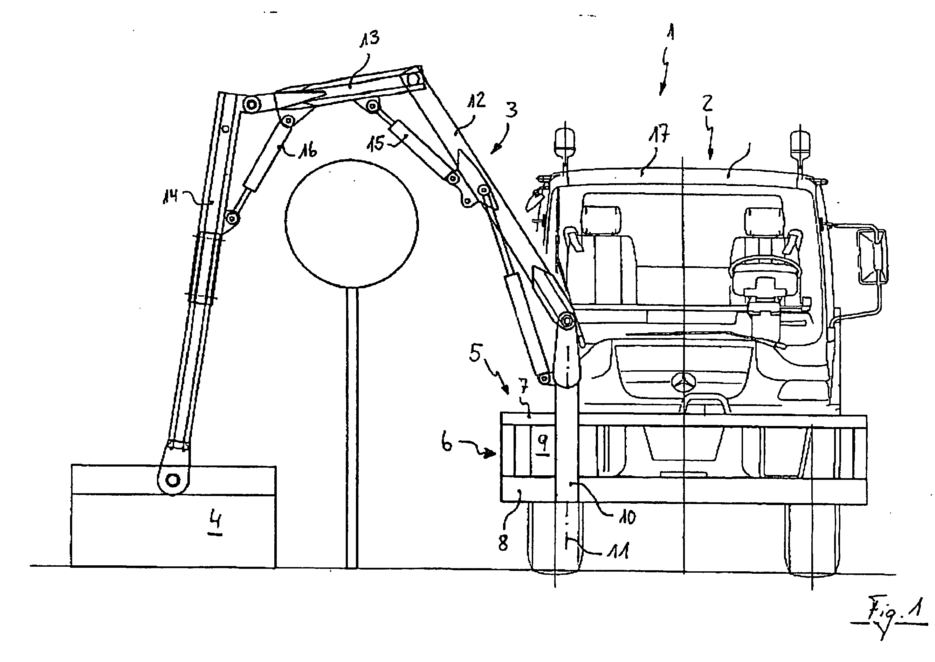

Das in Figur 1 dargestellte und insgesamt mit 1 bezeichnete Mäh- und/oder Schneidgerät umfaßt ein hier selbstfahrendes Fahrzeug 2, was nicht zwingend ist, einen mehrteiligen Ausleger 3 und zumindest einen Arbeitskopf 4, der beispielsweise als Mäh-, Schneid- oder Fräskopf oder als Räum- oder Reinigungskopf ausgebildet sein kann. Er kann mit Schneid- und/oder Schlagmitteln versehen sein. Neben Grasmähköpfen mit einer oder mehreren vertikal oder horizontal rotierenden Schneid- oder Schlagwalzen ist so beispielsweise auch eine reine Heckenschere oder dergleichen montierbar. Neben der hier gezeigten Frontmontage des Auslegers 3 kommt zusätzlich oder alternativ auch eine Heckmontage eines Auslegers 3 in Betracht.

Der Ausleger 3 ist an einem fahrzeugfesten Träger 5 montiert, der eine Querführungseinrichtung 6 mit hier zwei vertikal oder nahezu vertikal beabstandet zueinander angeordneten und quer zum Fahrzeug 2 verlaufenden Führungshilfen 7, 8, hier Horizontalprofilen, und einen daran zumindest quer zum Fahrzeug 2 verschieblichen Läufer 9 umfaßt.

Der Läufer 9 trägt für den Ausleger 3 eine aufragende Halterung 10 mit einer vertikalen Schwenkachse 11, um die herum der Ausleger 3 ein- und ausschwenkbar ist.

Das Fahrzeug 2 kann als Schmalspurtraktor ausgebildet sein, um damit einen flexiblen Einsatz auch in engen Bereichen zu ermöglichen. Auch größere, LKW-ähnliche Fahrzeuge sind möglich. Zudem kann die Arbeitsposition des Arbeitskopfes 4 von rechts auf links variiert werden.

Der Ausleger 3 umfaßt hier beispielhaft drei Abschnitte 12, 13, 14, von denen der mittlere Abschnitt 13 der kürzeste ist, so daß auch ein Hindernis, wie in Fig. 1 dargestellt, durch eine portalartige Stellung des Auslegers 3 übergriffen werden kann. Dabei können besonders einfach die Winkelstellungen zwischen dem ersten 12 und dem zweiten Abschnitt 13 einerseits und zwischen dem zweiten 13 und dem dritten Abschnitt 14 andererseits über eine gemeinsame Ansteuerung und Beaufschlagung der Antriebsorgane 15 und 16 mit nur einem Bedienknopf und einer gemeinsamen Leitung einstellbar sein. Der dritte Abschnitt 14 ist hier nach Art eines Teleskops längenvariabel.

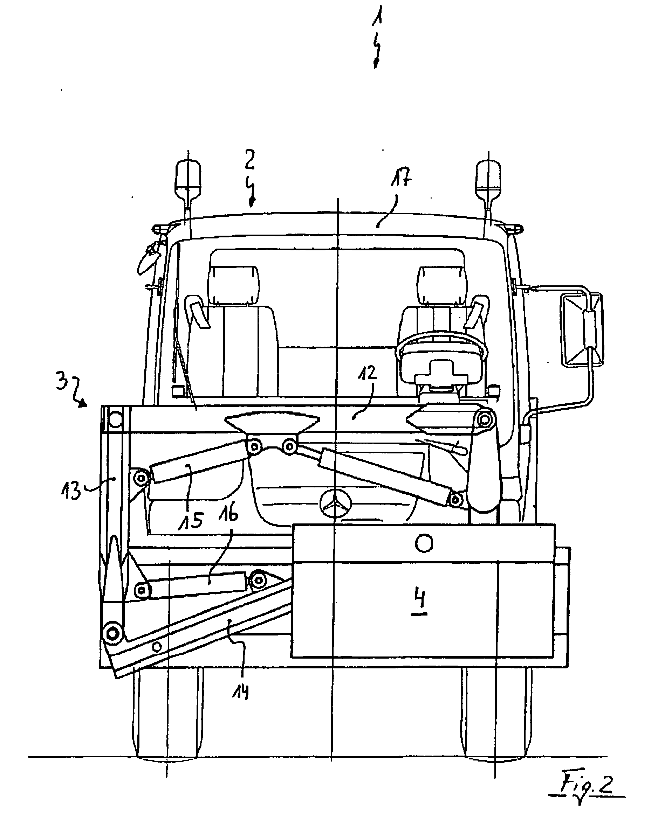

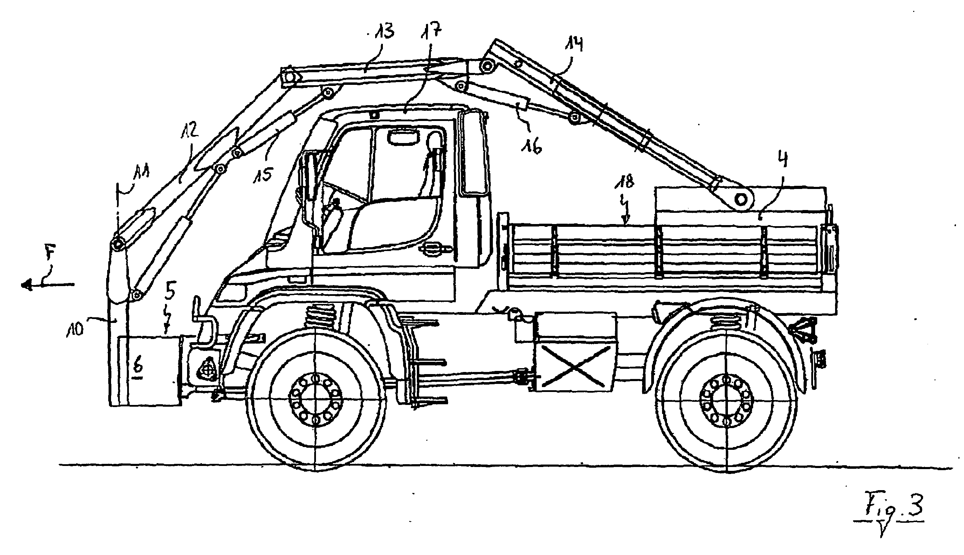

In der in Figur 2 gezeigten Quertransportstellung ist der Ausleger 3 quer vor - oder hinter (nicht dargestellt) - dem Fahrzeug 2 derart halterbar, daß der erste Abschnitt 12 als oberster Teil des Auslegers 3 etwa an der Unterkante einer Windschutzscheibe quer zum Fahrzeug 2 liegt, der zweite Abschnitt 13 zumindest nahezu vertikal abwärts weist, was aufgrund seiner geringen Länge möglich ist, und der dritte Abschnitt 14 in eingefahrener Stellung schräg aufwärts mit einer dem ersten Abschnitt entgegengesetzten Querkomponente verläuft. Das Packmaß ist daher minimiert, die Breite gering. Der Arbeitskopf 4 kann so horizontal und weit unten gehalten werden, dem Fahrer bleibt dadurch ein optimiertes Sichtfeld. In Fig. 3 ist alternativ eine Längstransportstellung dargestellt, in der von dem Ausleger 3 das Führerhaus 17 übergriffen ist und der Arbeitskopf 4 auf einer Ladefläche 18 abgelegt ist.

Es versteht sich jedoch, daß verschiedenste Auslegertypen von dem mit einer Komponente quer zum Fahrzeug 2 verlagerbaren Läufer 9 abgestützt sein können.

Die Führungshilfen 7, 8 der Querführungseinrichtung 6 sind hier jeweils als Kastenprofile aus einem vergüteten Stahl ausgebildet und umfassen mehrere parallel und längs zur Erstreckung der Profile 7, 8 verlaufende Kanten, unter anderem die Kanten K1, K2, K3, K4. Zwischen den Kanten K1 und K2 ist hier sowohl an dem oberen 7 wie auch an dem unteren Führungsprofil 8 jeweils eine mit einer Komponente in Fahrtrichtung F weisende Schrägfläche 19 ausgebildet, wohingegen auf der der Fahrtrichtung F entgegengerichteten Seite jeweils eine Vertikalfläche 20 zwischen den Kanten K3 und K4 ausgebildet ist. Zwischen den Kanten K2 und K3 kann beispielhaft eine Horizontalfläche 21 liegen. Das obere und untere Führungsprofil 7, 8 sind insoweit gleichartig ausgebildet, was jedoch nicht zwingend ist. Insbesondere die vertikale Abstützungsfläche 20 erfüllt in erster Linie an dem oberen Führungsprofil 7 eine einer Zugkomponente der Gewichtskraft entgegenwirkende Funktion. Auch eine V-förmige Ausbildung der Profile 7, 8 mit einer zum Zwischenraum weisenden Spitze wäre möglich, jedoch nicht ganz so günstig zum Abfangen der nach vorne wirkenden Zugkraft aufgrund des vor den Profilen 7, 8 gehaltenen Gewichts des Auslegers 3. Statt dessen wäre dann dort eine hohe Tangentialkraft wirksam.

Die Kanten weisen jeweils einen Mindcstradius von einigen Millimetern auf.

Zwischen den Profilen 7 und 8 ist der Läufer 9 derart verschieblich halterbar, daß er mit einer Komponente von unten an der oberen Führungshilfe 7 und mit eine Komponente von oben an der unteren Führungshilfe 8 angreift und so an diesen abgestützt ist. Der Läufer 9 ist hierbei als Schlitten ausgebildet, also gleitbeweglich entlang den Führungshilfen 7, 8. Auch eine Bewegung über Rollen wäre prinzipiell möglich. Der Läufer 9 hat dabei idealerweise Kontakt mit allen drei Flächen 19, 20, 21 beider Führungshilfen 7, 8. Diese Flächen können für eine kraftarme Gleitbewegung mit einer den Reibungswiderstand vcrmindernden Beschichtung, zum Beispiel mit einer Teflonkomponente, versehen sein.

Für die Gleitverbindung mit den Führungshilfen 7, 8 weist der Läufer 9 eine nach oben offene Ausnehmung 22 auf, die in Anpassung an die Profilierung der Führungshilfe 7 komplementär hierzu geformt ist. Entsprechend ist an der Unterseite des Läufers 9 eine nach unten offene Ausnehmung 27 zum Eingriff der unteren Führungshilfe 8 vorgesehen. Der Eingriff ist dadurch jeweils nahezu paßgenau.

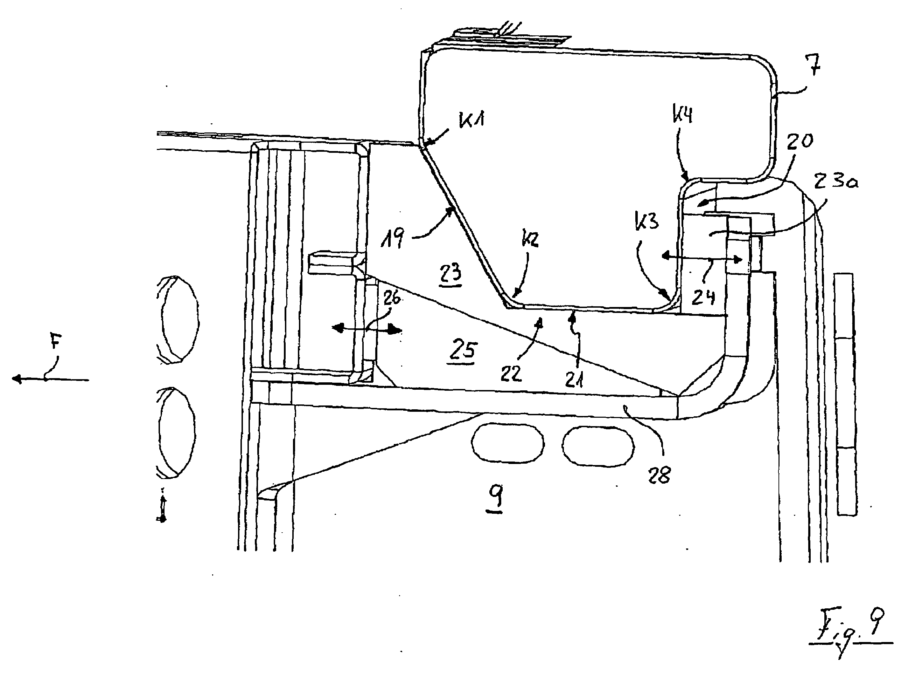

Wie in Fig. 9 für die obere Ausnehmung 22 gezeigt ist, ist diese von einem Stahlrahmen 28 umgrenzt, in den zumindest ein Kunststoffkörper 23 mit einer glatten Oberfläche als Gleithilfe eingelegt ist. Im gezeichneten Ausführungsbeispiel ist zusätzlich für eine genaue Positionierung des Läufers 9 eine Verstellmöglichkeit eines in Eingriffsstellung die vertikale rückseitige Fläche 20 hintergreifenden Schenkels 23a entlang dem Pfeil 24, also in Fahrzeuglängsrichtung, eingezeichnet. Alternativ können auch die in der Ausnchmung 22 liegenden Kunststoffteile 23, 23a zusammen einstückig sein.

Als weitere Einstellmöglichkeit ist ein Keil 25 vorgesehen, der in der Ausnehmung 22 den Kunststoffkörper 23 untergreift und zum Beispiel über einen von vorne zugänglichen Gewindebolzen in Richtung des Pfeils 26 horizontal verschieblich ist. Durch Einschieben des Keils 25 kann der Kunststoffkörper gleichzeitig eine Krafteinwirkung zu der Schrägfläche 19 und zu der horizontalen Fläche 21 erfahren und dadurch gegenüber diesen gleichzeitig justiert werden, wobei die Justage gegenüber der hinteren und gegen Zugbeanspruchung haltenden Fläche 20 durch Verschiebung des Teils 23a in Richtung des Pfeils 24 erfolgen kann. In jeder Kraftrichtung kann somit sichergestellt werden, daß eine paßgenaue Einfassung der Führungshilfe 7 (analog der Führungshilfe 8 im unteren Bereich) erfolgt, ohne daß der Läufer 9 so stramm an diesen sitzen würde, daß es zu einem Verklemmen kommen kann. Eine Nachjustage kann einem Verschleiß der Kunststoffteile 23, 23a bei zunehmender Betriebsdauer Rechnung tragen. Durch Einschieben des Keils 25, zum Beispiel über einen Gewindebolzen, findet somit auch eine Justage entlang einer Vertikalen statt, der Läufer 9 kann insgesamt angehoben oder abgesenkt werden.

Der Läufer 9 umfaßt zudem einen Schutzkäfig 29, in dem ein Antriebsorgan für das Verschwenken des Auslegers 9 um die Schwenkachse 11 der Halterung 10 geschützt gelegen sein und an den Ansätzen 30 des Auslegers 3 für seine Drehung um diese Achse 11 angreifen kann.

### Bezugszeichenliste:

- 1: Mäh- und oder Schneidgerät,
- 2: Fahrzeug,
- 3: Ausleger,
- 4: Arbeitskopf,
- 5: Träger,
- 6: Querführungseinrichtung,
- 7: obere Führungshilfe,
- 8: untere Führungshilfe,
- 9: Läufer,
- 10: Halterung,
- 11: Schwenkachse,
- 12: erster Abschnitt,
- 13: zweiter Abschnitt,
- 14: dritter Abschnitt,
- 15: Antriebsorgan,
- 16: Antriebsorgan,
- 17: Führerhaus,
- 18: Ladefläche,
- 19: Schrägfläche,
- 20: Vertikalfläche,
- 21: Horizontalfläche,
- 22: obere Ausnehmung,
- 23: Kunststoffteil,
- 23a: Kunststoffteil,
- 24: horizontale Nachstellrichtung,
- 25: Keil,
- 26: Nachstellrichtung,
- 27: untere Ausnehmung,
- 28: Stahlrahmen,
- 29: Schutzkäfig,
- 30: Ansätze
- K1, K2, K3, K4: Längskanten der Führungsprofile,
- F: Fahrtrichtung

## Patentansprüche

1. Mäh- und/oder Schneidgerät (1) mit zumindest einem an einem Fahrzeug (2) halterbaren und gegenüber diesem an zumindest einer oberen und einer unteren Führungshilfe (7;8) quer beweglichen Ausleger (3), der in Betriebsstellung auswärts erstreckt ist und zumindest einen Arbeitskopf (4) trägt,
**dadurch gekennzeichnet,**
**daß** der Ausleger (3) an einem mit einer Komponente von unten an der oberen Führungshilfe (7) und mit einer Komponente von oben an der unteren Führungshilfe (8) abgestützten und quer beweglichen Läufer (9) gehalten ist.

2. Mäh- und/oder Schneidgerät nach Anspruch 1,
**dadurch gekennzeichnet,**
**daß** der Läufer (9) als Schlitten ausgebildet ist.

3. Mäh- und/oder Schneidgerät nach einem der Ansprüche 1 oder 2,
**dadurch gekennzeichnet,**
**daß** der Läufer (9) eine nach oben offene Ausnehmung (22) zum Eingriff der oberen Führungshilfe (7) und eine nach unten offene Ausnehmung (27) zum Eingriff der unteren Führungshilfe (8) aufwcist.

4. Mäh- und/oder Schneidgerät nach einem der Ansprüche 1 bis 3,
**dadurch gekennzeichnet,**
**daß** die Führungshilfen (7;8) als mit mehreren parallelen Längskanten (K1;K2;K3;K4) versehene Kastenprofile ausgebildet sind.

5. Mäh- und/oder Schneidgerät nach einem der Ansprüche 1. bis 4,
**dadurch gekennzeichnet,**
**daß** zumindest die obere Führungshilfe (7) eine in Fahrzeuglängsrichtung auswärts weisende Schrägfläche (19) aufweist.

6. Mäh- und/oder Schneidgerät (1) nach einem der Ansprüche 1 bis 5,
**dadurch gekennzeichnet,**
**daß** zumindest die obere Führungshilfe (7) eine in Fahrzeuglängsrichtung einwärts weisende Vertikalfläche (20) aufweist.

7. Mäh- und/oder Schneidgerät (1) nach einem der Ansprüche 5 oder 6,
**dadurch gekennzeichnet,**
**daß** sowohl die obere als auch die untere Führungshilfe (7;8) jeweils eine in Fahrzeuglängsrichtung einwärts weisende Vertikalfläche (20) aufweisen.

8. Mäh- und/oder Schneidgerät nach einem der Ansprüche 1 bis 7,
**dadurch gekennzeichnet,**
**daß** die Positionierung des Läufers (9) bezüglich der Fahrzeuglängsrichtung einstellbar ist.

9. Mäh- und/oder Schneidgerät nach Anspruch 8,
**dadurch gekennzeichnet,**
**daß** der Abstand über quer zu den Führungshilfen (7;8) erstreckte Gewindebolzen verstellbar ist.

10. Mäh- und/oder Schneidgerät nach einem der Ansprüche 1 bis 9,
**dadurch gekennzeichnet,**
**daß** die Positionierung des Läufers (9) entlang einer Vertikalen einstellbar ist.

11. Mäh- und/oder Schneidgerät nach einem der Ansprüche 1 bis 10,
**dadurch gekennzeichnet,**
**daß** der Schlitten (9) einen Schutzkäfig (29) zur Aufnahme von zumindest einem Antriebsorgan für eine Schwenkbewegung des Auslegers (3) um eine vertikale Achse (11) umfaßt.

12. Ausleger (3) zur beweglichen und variablen Halterung zumindest eines Arbeitskopfes (4), wobei der Ausleger (3) an einem Läufer (9) abgestützt ist, der zur beweglichen Halterung des Auslegers (3) an zumindest einer oberen (7) und einer unteren Führungsschiene (8) vorgesehenen ist,
**dadurch gekennzeichnet,**
**daß** der Ausleger an einem mit einer Komponente von unten an der oberen Führungsschiene (7) und mit einer Komponente von oben an der unteren Führungsschiene (8) gehaltenen und quer beweglichen Läufer (9) abgestützt ist.

## Claims

1. A mowing and/or cutting apparatus (1) with at least one boom arm (3) which can be mounted on a vehicle (2) and is transversely movable relative thereto on at least an upper and a lower guide aid (7; 8), which boom arm, in the operating position, is extended outwards and bears at least one working head (4), **characterised in that** the boom arm (3) is held on a runner (9) which is transversely movable and supported with a component from below on the upper guide aid (7) and with a component from above on the lower guide aid (8).

2. A mowing and/or cutting apparatus according to Claim 1, **characterised in that** the runner (9) is in the form of a slide.

3. A mowing and/or cutting apparatus according to one of Claims 1 or 2, **characterised in that** the runner (9) has a recess (22) open at the top for engaging the upper guide aid (7) and a recess (27) open at the bottom for engaging the lower guide aid (8).

4. A mowing and/or cutting apparatus according to one of Claims 1 to 3, **characterised in that** the guide aids (7; 8) are in the form of box profiles provided with a plurality of parallel longitudinal edges (K1; K2; K3; K4).

5. A mowing and/or cutting apparatus according to one of Claims 1 to 4, **characterised in that** at least the upper guide aid (7) has an inclined surface (19) pointing outwards in the longitudinal direction of the vehicle.

6. A mowing and/or cutting apparatus (1) according to one of Claims 1 to 5, **characterised in that** at least the upper guide aid (7) has a vertical surface (20) pointing inwards in the longitudinal direction of the vehicle.

7. A mowing and/or cutting apparatus (1) according to one of Claims 5 or 6, **characterised in that** both the upper and the lower guide aid (7; 8) each have a vertical surface (20) pointing inwards in the longitudinal direction of the vehicle.

8. A mowing and/or cutting apparatus according to one of Claims 1 to 7, **characterised in that** the positioning of the runner (9) is adjustable with respect to the longitudinal direction of the vehicle.

9. A mowing and/or cutting apparatus according to Claim 8, **characterised in that** the distance is adjustable via threaded bolts which extend transversely to the guide aids (7; 8).

10. A mowing and/or cutting apparatus according to one of Claims 1 to 9, **characterised in that** the positioning of the runner (9) is adjustable along a vertical.

11. A mowing and/or cutting apparatus according to one of Claims 1 to 10, **characterised in that** the slide (9) comprises a protective cage (29) for holding at least one drive element for a pivoting movement of the boom arm (3) about a vertical axis (11).

12. A boom arm (3) for the movable and variable mounting of at least one working head (4), the boom arm (3) being supported on a runner (9) which is intended for movably mounting the boom arm (3) on at least an upper (7) and a lower guide rail (8), **characterised in that** the boom arm is supported on a runner (9) which is transversely movable and held with a component from below on the upper guide rail (7) and with a component from above on the lower guide rail (8).

## Revendications

1. Appareil (1) de fauchage et/ou de coupe, comprenant au moins un bras (3) pouvant être maintenu sur un véhicule (2), et pouvant être déplacé transversalement par rapport à celui-ci, sur au moins une aide de guidage supérieure et une aide de guidage inférieure (7 ; 8), bras qui, dans la position de travail, s'étend vers l'extérieur et porte au moins une tête de travail (4),
**caractérisé en ce que**
le bras (3) est maintenu sur un chariot (9) transversalement mobile, supporté sur l'aide de guidage supérieure (7) par l'intermédiaire d'un composant s'engageant par le bas, et sur l'aide de guidage inférieure (8) par l'intermédiaire d'un composant s'engageant par le haut.

2. Appareil de fauchage et/ou de coupe selon la revendication 1,
**caractérisé en ce que**
le chariot (9) est réalisé sous forme d'un chariot coulissant.

3. Appareil de fauchage et/ou de coupe selon l'une des revendications 1 ou 2,
**caractérisé en ce que**
le chariot (9) comporte un évidement (22) ouvert vers le haut, prévu pour l'engagement de l'aide de guidage supérieure (7), et un évidement (27) ouvert vers le bas, prévu pour l'engagement de l'aide de guidage inférieure (8).

4. Appareil de fauchage et/ou de coupe selon l'une des revendications 1 à 3,
**caractérisé en ce que**
les aides de guidage (7 ; 8) sont réalisées sous forme de profilés rectangulaires présentant plusieurs bords longitudinaux parallèles (K1 ; K2 ; K3 ; K4).

5. Appareil de fauchage et/ou de coupe selon l'une des revendications 1 à 4,
**caractérisé en ce que**
au moins l'aide de guidage supérieure (7) comporte une face oblique (19) tournée vers l'extérieur, dans le sens longitudinal du véhicule.

6. Appareil (1) de fauchage et/ou de coupe selon l'une des revendications 1 à 5,
**caractérisé en ce que**
au moins l'aide de guidage supérieure (7) comporte une face verticale (20) tournée vers l'intérieur, dans le sens longitudinal du véhicule.

7. Appareil (1) de fauchage et/ou de coupe selon l'une des revendications 5 ou 6,
**caractérisé en ce que**
à la fois l'aide de guidage supérieure et l'aide de guidage inférieure (7 ; 8) comportent chacune une face verticale (20) tournée vers l'intérieur, dans le sens longitudinal du véhicule.

8. Appareil de fauchage et/ou de coupe selon l'une des revendications 1 à 7,
**caractérisé en ce que**
le positionnement du chariot (9) par rapport au sens longitudinal du véhicule est réglable.

9. Appareil de fauchage et/ou de coupe selon la revendication 8,
**caractérisé en ce que**
l'écartement est réglable par l'intermédiaire de tiges filetées s'étendant transversalement aux aides de guidage (7 ; 8).

10. Appareil de fauchage et/ou de coupe selon l'une des revendications 1 à 9,
**caractérisé en ce que**
le positionnement du chariot (9) est réglable le long d'une verticale.

11. Appareil de fauchage et/ou de coupe selon l'une des revendications 1 à 10,
**caractérisé en ce que**
le chariot coulissant (9) comprend une cage de protection (29) destinée à recevoir au moins un organe d'entraînement pour un mouvement de pivotement du bras (3) autour d'un axe vertical (11).

12. Bras (3) pour le maintien mobile et variable d'au moins une tête de travail (4), le bras (3) étant supporté par un chariot (9), qui est prévu pour le maintien mobile du bras (3) sur au moins un rail de guidage supérieur (7) et un rail de guidage inférieur (8),
**caractérisé en ce que**
le bras est supporté sur un chariot (9) transversalement mobile, maintenu sur le rail de guidage supérieur (7) par l'intermédiaire d'un composant s'engageant par le bas, et sur le rail de guidage inférieur (8) par l'intermédiaire d'un composant s'engageant par le haut.
